# NEUE EUROPÄISCHE PATENTSCHRIFT

(11) **EP 2 580 600 B2**
(45) Veröffentlichungstag und Bekanntmachung des Hinweises auf die Entscheidung über den Einspruch: **17.04.2019**
(45) Hinweis auf die Patenterteilung: 27.01.2016
(21) Anmeldenummer: 11727673.3
(22) Anmeldetag: 10.06.2011
(51) Int. Cl.: G01P 3/489, G01D 5/244, H04Q 9/00, H04Q 9/04

(54) **SENSORANORDNUNG ZUR GESCHWINDIGKEITSMESSUNG**
SENSOR ARRAY FOR SPEED MEASUREMENT
ENSEMBLE CAPTEUR POUR MESURER UNE VITESSE

(30) Priorität: 10.06.2010 DE 102010029961; 10.06.2010 DE 102010029962
(43) Veröffentlichungstag der Anmeldung: 17.04.2013
(73) Patentinhaber: Continental Teves AG & Co. OHG, 60488 Frankfurt am Main (DE)
(72) Erfinder: ACKER, Heinrich, 65824 Schwalbach (DE)
(86) Internationale Anmeldenummer: PCT/EP2011/059746
(87) Internationale Veröffentlichungsnummer: WO 2011/154544

(56) Entgegenhaltungen:
- EP-A2- 1 598 672
- DE-A1- 19 811 095
- US-A1- 2007 030 162
- US-A1- 2007 030 162
- US-A1- 2007 085 527
- US-A1- 2008 159 467
- US-B1- 6 646 964

## Beschreibung

Die Erfindung betrifft eine Sensoranordnung gemäß Oberbegriff von Anspruch 1 sowie die Verwendung der Sensoranordnung in Kraftfahrzeugen.

Die Messung einer Drehzahl, die in der Technik an vielen Maschinen und Anlagen benötigt wird, ist physikalisch gleichbedeutend mit der Messung der Winkelgeschwindigkeit. Es ist allgemein bekannt, die Drehzahl von Wellen zu messen, indem auf die Welle am Umfang ein periodisches Muster, genannt "Encoder", aufgebracht wird (z.B. ein Zahnrad), welches von einem neben der Welle ortsfest angebrachten Sensor abgetastet wird. Der Sensor hat die Fähigkeit, zwischen Zahn und Zahnlücke (oder anderen periodisch wechselnden Eigenschaften, wie z.B. magnetischer Feldrichtung oder optischer Transparenz) zu unterscheiden. Der Sensor erzeugt daraufhin ein Ausgangssignal, das die gleiche Periodizität aufweist wie das abgetastete Muster.

Ein solcher Sensor gibt, je nach vorhandener Signalverarbeitung, unterschiedliche Signale aus: Es gibt annähernd sinusförmige Signale, die meist direkt vom primären Sensorelement erzeugt werden, oder Rechtecksignale, die meist von der nachgeschalteten Signalverarbeitung durch Komparatoren erzeugt werden. Die sinusförmigen Signale treten oft als sin-/cos-Signalpaar auf, da diese Kombination Vorteile aufweist, u.a. hinsichtlich einer Richtungserkennung. Beliebige Kombinationen der erwähnten Signale sind möglich, so dass bis zu vier Ausgänge (und jede Teilmenge davon) vorhanden sein können: sin, cos, Rechteck in Phase mit sin, Rechteck in Phase mit cos. Alle diese Signale sind frequenzanalog, d.h. die Frequenz ändert sich kontinuierlich innerhalb des durch die Anwendung gegebenen Intervalls. Das elektrische Ausgangssignal ist ein direktes Abbild des Encoders. Auch die Rechtecksignale sind daher nicht als "digital" aufzufassen, denn die diskrete Größe Amplitude diskretisiert nicht die sensorische Information. Je nach Implementierung gibt es auch die Möglichkeit, dass der physikalische sensorische Prozess ein Signal mit der doppelten Frequenz des Encodermusters erzeugt. Das betrifft z.B. bestimmte AMR-Sensorelemente, deren elektrische Signalperiode nur 180° Drehung des (Encoder-) Magnetfeldes umfasst.

Werden Sensoren der beschriebenen Art in Messgeräten oder Regelungen eingesetzt, so ist zu beachten, dass der Messvorgang mit den beschriebenen Ausgangssignalen keineswegs komplett ist: Während die meisten Messsysteme Ausgangssignale liefern, die entweder digital codiert sind oder deren Ausgangsgröße ein unmittelbares Maß für den Messwert ist, so muss bei den hier betrachteten Sensoren die Messgröße erst aus der Ausgangsschwingung bzw. Impulsfolge berechnet werden. Das betrifft Geschwindigkeits-, Winkelgeschwindigkeits-, und Drehzahlmessungen ebenso wie Winkelmessungen, da oft absolute Messungen benötigt werden, die aus dem periodischen Signal durch Zählen gewonnen werden. Die sin-/cos-Signale haben dabei den Vorteil der Interpolationsmöglichkeit, erfordern aber einen höheren Aufwand zur Auswertung.

Die dargestellte Technik wird in gleicher Weise für lineare Weg- und Geschwindigkeits-Messung verwendet; mit linearen statt ringförmigen Encodern.

Die oben genannte Unvollständigkeit der Messung verursacht auf der Empfängerseite des Sensorsignals einen u.U. erheblichen Aufwand. Im Allgemeinen muss ein Frequenzzähler aufgebaut werden, der mit den üblichen Methoden (Torzeit- oder Periodendauermessung) die Frequenz misst. Bei einem Regelsystem mit mikrocontrollerbasiertem Aufbau wird oft versucht, diesen Zähler ohne dedizierte Hardware zu realisieren, indem der Programmablauf immer dann unterbrochen wird, wenn an dem Eingang, an dem der Sensor liegt, eine Pegeländerung erkannt wird. Im Rahmen der Unterbrechung werden dann entsprechende Programmteile ausgeführt. Leider geht durch die bei hohen Frequenzen häufigen Unterbrechungen viel Rechenzeit für den eigentlichen Regelvorgang verloren. Das Verfahren ist daher keineswegs als kostenfrei zu betrachten, denn ohne die Frequenzzählung hätte für die gleiche Anwendung ein Controller geringerer Leistung oder niedrigerer Taktfrequenz ausgereicht. Der eigentliche Zählvorgang wird bei vielen Controllertypen direkt durch die integrierte Hardware unterstützt ("Capture/Compare Unit"), es bleibt dann der Programmaufwand für die Ermittlung der Frequenz aus dem Zählerstand und alle weiteren Schritte.

Hohe Anforderungen hinsichtlich einer gering zu haltenden Verzögerung und die hohe Spreizung zwischen minimaler und maximaler Frequenz bei einigen Anwendungen, z.B. im Automobil, machen eine Anpassung der Torzeit an die gemessene Frequenz erforderlich (bzw. einen Wechsel zwischen Torzeit-oder Periodendauermessung), insbesondere bei Regelanwendungen. Dadurch wird das notwendige Programm komplizierter und die Rechenzeit steigt weiter an.

Eine mögliche Lösung ist die Verwendung dedizierter Hardware (z.B. eines Mikrocontrollers oder ASICs allein für die Frequenzmessung), die aber Kosten, Baugröße und Stromverbrauch des gesamten Systems erhöht.

Bei allen Überlegungen bezüglich Systemarchitektur und Kosten wird davon ausgegangen, dass alle Mess- und Regelsysteme heute digital arbeiten und damit jedes Messergebnis in den Speicher eines Rechners transferiert werden muss, um weiterverarbeitet zu werden. Im einfachsten Fall handelt es sich dabei um einen Mikrocontroller, der nur auf eine Anzeige wirkt. Das Dokument US 2007/0030162 A1 offenbart eine zu der vorliegenden Anmeldung sehr ähnliche Sensoranordnung.

Der Erfindung liegt die Aufgabe zu Grunde, eine Sensoranordnung vorzuschlagen, mit welcher die Frequenz- und optional zusätzlich eine Winkelmessung zu relativ geringeren Kosten realisiert werden kann, wobei insbesondere die Kosten auf der Sensorseite (Sender) und der Steuergeräte-/Elektronische Kontrolleinheit "ECU"-/Reglerseite (Empfänger) in Summe zu betrachten sind. Beim Empfänger soll dazu besonders bevorzugt keine Mikrocontroller-Peripherie vorausgesetzt werden, die dazu geeignet ist, eine Frequenzmessung zu unterstützen. Der eingesetzte Mikrocontroller soll zweckmäßigerweise möglichst wenig durch die Lösung belastet werden, so dass seine Leistung ausschließlich nach anderen Aufgaben dimensioniert werden kann, mit entsprechender Wirkung auf Kosten und Stromverbrauch.

Die Aufgabe wird erfindungsgemäß gelöst durch die Sensoranordnung gemäß Anspruch 1.

Der Geschwindigkeitssensor weist eine Sensor-Taktgebereinheit auf, mit welcher das digitale Frequenzsignal skaliert ist und/oder von dieser abhängt.

Es ist bevorzugt, dass zumindest die Sensor-Taktgebereinheit mit der Signalverarbeitungsschaltung gemeinsam auf einem Chip integriert bzw. monolithisch ausgebildet ist, insbesondere als RC-Oszillator.

Die elektronische Kontrolleinheit weist vorzugsweise eine ECU-Taktgebereinheit auf, welche insbesondere einen Quarzoszillator oder einen Keramikoszillator oder einen anderen Oszillator mit ähnlicher Präzision umfasst.

Gemäß einem nicht erfindungsgemäßen Ausführungsbeispiel ist die Sensoranordnung so ausgebildet, dass der Geschwindigkeitssensor nacheinander Datenworte mit einer Sensorsendefrequenz an die elektronische Kontrolleinheit überträgt, wobei diese Sensorsendefrequenz abhängig ist von der Taktfrequenz seiner Sensor-Taktgebereinheit und wobei die elektronische Kontrolleinheit so ausgebildet ist, dass sie die Sensorsendefrequenz erfasst und damit unter Berücksichtigung der Taktfrequenz der ECU-Taktgebereinheit wenigstens eine Frequenzinformation eines Datenwortes skaliert oder korrigiert.

Die elektronische Kontrolleinheit ist so ausgelegt, dass sie zu definierten Zeiten oder in einem definierten Takt Datenanforderungssignale an den Geschwindigkeitssensor sendet und dieser so ausgebildet ist, dass er als Antwort darauf jeweils ein Datenwort an die elektronische Kontrolleinheit überträgt. Die elektronische Kontrolleinheit ist dabei insbesondere so ausgebildet, dass sie in definierter Weise in Abhängigkeit der Taktfrequenz ihrer ECU-Taktgebereinheit die Datenanforderungssignale an den Geschwindigkeitssensor sendet, besonders bevorzugt mit konstanter Anforderungsfrequenz, und dass der Geschwindigkeitssensor so ausgebildet ist, dass er die Anforderungsfrequenz erfasst und in Abhängigkeit eines Verhältnisses von Anforderungsfrequenz zur Taktfrequenz der eigenen Sensor-Taktgebereinheit die Frequenzinformation oder das Frequenzsignal eines Datenwortes, ganz besonders bevorzugt jeden Datenwortes, anpasst oder korrigiert.

Der Geschwindigkeitssensor ist zweckmäßigerweise so ausgebildet, dass ein Datenwort wenigstens eine oder mehrere der folgenden Informationen umfasst
- eine Frequenzinformation oder das digitale Frequenzsignal,
- eine Winkelinformation,
- eine interne Statusinformation des Geschwindigkeitssensors,
- eine externe Statusinformationen, von wenigstens einer externen, an den Geschwindigkeitssensor angeschlossenen Komponente,
- eine Identifikationsinformation des Geschwindigkeitssensors selbst und/oder
- detaillierte Messinformationen.

Es ist bevorzugt, dass der Geschwindigkeitssensor, zumindest ein Sensorelement und einen Analog-Digital-Wandler umfasst, welcher die Sensorelementausgangssignale digitalisiert, wobei der Geschwindigkeitssensor eine Costas-Schleifen-Einheit aufweist, welche am Ausgang des Analog-Digital-Wandlers angeschlossen ist, wobei der Analog-Digital-Wandler insbesondere als Sigma-Delta-Modulator ausgebildet ist.

Unter einer Costas-Schleifen-Einheit wird bevorzugt eine elektronische Einrichtung verstanden, welche eine Costas-Schleife bzw. "Costas-Loop" zur Signalverarbeitung umfasst.

Der Analog-Digital-Wandler ist vorzugsweise als Sigma-Delta-Modulator ausgebildet.

Die Costas-Schleifen-Einheit ist bevorzugt so ausgebildet, dass sie zumindest ein Frequenzausgangssignal oder ein Phasenausgangssignal oder ein Frequenzausgangssignal und ein Phasenausgangssignal bereitstellt, jeweils in Abhängigkeit des Sensorelementausgangssignals.

Es ist bevorzugt, dass der Ausgang des Analog-Digital-Wandlers, der einen Bitstrom bereitstellt, jeweils mit einem ersten Multiplizierer und einem zweiten Multiplizierer verbunden ist, wobei dem ersten und zweiten Multiplizierer jeweils zusätzlich ein Taktsignal der Sensor-Taktgebereinheit zugeführt werden, wobei die dem ersten und dem zweiten Multiplizierer zugeführten Taktsignale zueinander um 90° phasenverschoben sind, wobei die Ausgangssignal des ersten und zweiten Multiplizierers jeweils einem Tiefpassfilter zugeführt werden, deren Ausgänge jeweils einer gemeinsamen Phasendetektoreinheit zugeführt werden, welche ausgangsseitig mit einer Reglereinheit verbunden ist, die ausgangsseitig mit der Sensor-Taktgebereinheit verbunden ist. Insbesondere umfasst bzw. bildet die Costas-Schleifen-Einheit obige bevorzugte Schaltung.

Die Sensor-Taktgebereinheit ist vorzugsweise als numerisch gesteuerter Oszillator, auch digital gesteuerter Oszillator "Digitally Controlled Oscillator", "DCO" bzw. "Numerically Controlled Oscillator", "NCO" genannt, ausgebildet, wobei die Sensor-Taktgebereinheit das Frequenzausgangssignal und/oder das Phasenausgangssignal als Ausgangssignale der Costas-Schleifen-Einheit bereitstellt.

Es ist bevorzugt, dass das Ausgangssignal der Phasendetektoreinheit und das Phasenausgangssignal der Sensor-Taktgebereinheit addiert werden, insbesondere in einem Summierer, wodurch ein korrigiertes Phasensignal erzeugt wird, welches ein Ausgangssignal der Costas-Schleifen-Einheit bildet, insbesondere alternativ oder zusätzlich zum Phasenausgangssignal der Sensor-Taktgebereinheit. Unter diesem Addieren bzw. dem Summierer wird insbesondere ebenfalls ein Subtrahieren bzw. eine entsprechende Beschaltung verstanden. Dieses Addieren und damit die Bildung des korrigierten Phasensignals finden besonders bevorzugt in einer Korrekturvorrichtung des Geschwindigkeitssensors statt.

Der Geschwindigkeitssensor umfasst vorzugsweise eine Ausgangsschaltung, welcher von der Costas-Schleifen-Einheit ein Frequenzsignal und mindestens ein Phasensignal zugeführt werden, insbesondere das Frequenzausgangssignal der Sensor-Taktgebereinheit und das Phasenausgangssignal der Sensor-Taktgebereinheit und/oder das korrigierte Phasensignal, wobei die Ausgangsschaltung wenigstens eine Treiberstufe zum Senden des Ausgangssignals des Geschwindigkeitssensors über wenigstens eine Leitung aufweist und eine Logikeinheit aufweist, mit welcher das Ausgangssignal der Ausgangsschaltung mit definierten Signaleigenschaften als definierte Schnittstelle bereitgestellt wird.

Es ist bevorzugt, dass die Logikeinheit programmierbar und/oder umschaltbar ausgebildet ist, so dass das Ausgangssignal der Ausgangsschaltung und damit des Geschwindigkeitssensors an unterschiedliche Schnittstellen-Anforderungen anpassbar ausgebildet ist. Die Logikeinheit umfasst dabei insbesondere eine einfache Verbindungsleitung zwischen einem Flip-Flop eines Phasenregisters und dem Ausgang, wobei die Treiberstufe immer schaltet, wenn sich der Zustand dieses Flip-Flops ändert, d.h. die Phase einen bestimmten Schwellwert überschreitet. Alternativ vorzugsweise oder zusätzlich umschaltbar ist die Logikeinheit so ausgebildet, dass die Logikeinheit ein Datenwort erzeugt, in welchem wenigstens eine Frequenzinformation und/oder Phaseninformation codiert ist.

Zumindest die Costas-Schleifen-Einheit und die Ausgangsschaltung sind vorzugsweise als digitale Schaltungen ausgebildet.

Es ist zweckmäßig, dass die Logikeinheit eine Kompensationseinrichtung aufweist, welche Kompensations-Informationen, insbesondere in wenigstens einer Tabelle, umfasst, mit denen Encoderfehler, dessen moduliertes magnetisches Feld oder optisches Muster das Sensorelement erfasst, kompensiert werden können und/oder mit denen Temperatureinflüsse kompensierbar sind und/oder mit denen eine Phasenverschiebung einstellbar oder programmierbar ist und/oder mit denen eine Verzögerungszeit im Signalpfad innerhalb des Sensors kompensierbar ist, wozu die Kompensationseinrichtung von außerhalb des Geschwindigkeitssensors angesteuert wird und/oder vom Geschwindigkeitssensor intern selbstständig angesteuert wird.

Insbesondere liegt der erfindungsgemäßen Sensoranordnung der Gedanke zu Grunde, eine Bestimmung der zu messenden Frequenz bzw. des Winkels bereits im Sensor durchzuführen, d.h. eine Abkehr von der unvollständigen Messung, die erst durch die Frequenzmessung beim Empfänger komplettiert wird. Im Sensor befindet sich bevorzugt eine Signalverarbeitungsschaltung, die entweder die Frequenzzählung und/oder Winkelmessung aus einem oder mehreren der sonst üblichen Ausgangssignale vornimmt, oder direkt aus dem Sensorsignal eine Frequenz und Phase bestimmen kann, z.B. durch eine Phasenregelung. Das bedeutet, der Sensor beinhaltet bereits den Rechner, in dessen Speicher das Messergebnis vorliegt. Der Transfer dieser Information zum Empfänger wird daher in Form eines Datenworts auf einer, zweckmäßigerweise seriellen, digitalen Schnittstelle vorgenommen; das frequenzanaloge Signal als Übertragungsform entfällt völlig. Die angestrebte Einsparung von Ressourcen wird bevorzugt dadurch erreicht, dass beim Empfänger nur eine Kopie der gesendeten Daten angelegt werden muss, aber kein Dekodierungsaufwand und kein Zählen und Erfassen von Zählerständen zu bestimmten Zeitpunkten erfolgt. Ein Vorteil dabei ist, dass eine Verschiebung von Signalflanken durch Bauteiltoleranzen oder Laufzeiten das Messergebnis nicht mehr beeinflusst, solange die Toleranzen im erlaubten Bereich der gewählten Schnittstelle bleiben.

Digitale Regler arbeiten üblicherweise in bzw. mit einem festen Takt, in dem sie zyklisch die Phasen Sensorabfrage, Berechnung der Antwort und Einstellen der Aktoren durchlaufen. Die Frequenz, mit der die Datenworte beim Empfänger eintreffen sollten, ist damit bei Regelanwendungen durch die Frequenz dieses Zyklus nach oben begrenzt, da der Regler, also der Mikrokontroller der elektronischen Kontrolleinheit, in kürzerer Zeit als einer Zykluszeit ohnehin nicht auf Sensorsignale reagieren kann. Dieser Umstand ist beim Vergleich zwischen der Lösung nach dem Stand der Technik und der neuen Lösung insbesondere zu berücksichtigen: Falls die Frequenz der frequenzanalogen Signale einer Implementierung nach dem Stand der Technik höher ist als die Frequenz, mit der Datenworte nach der neuen Lösung übertragen werden, kann daraus *nicht* geschlossen werden, dass die Implementierung nach dem Stand der Technik schneller arbeitet. Neben der beschriebenen Begrenzung durch den Reglerzyklus ist zu berücksichtigen, dass aus der frequenzanalogen Impulsfolge jenes Datenwort erst noch berechnet werden muss, das bei der erfindungsgemäßen Sensoranordnung bereits vorliegt. Dazu ist eine anwendungsabhängige Zahl von Impulsen erforderlich, die je nach geforderter Genauigkeit u.U. sehr hoch sein kann.

Die im Vergleich zu üblichen Drehzahl- bzw. Winkelgeschwindigkeitssensoren völlig andere Partitionierung des Systems bzw. der erfindungsgemäßen Sensoranordnung ermöglicht neue bevorzugte Funktionen, die bei üblichem Systemaufbau entweder nicht möglich oder nur unter großen Schwierigkeiten realisierbar sind:
1. Das Ausgangssignal ist frei skalierbar. Zwischen die frequenzmessende Signalverarbeitung und die Ausgabe eines Datenwortes kann ein Funktionsblock geschaltet werden, der eine programmierbare mathematische Abbildung vornimmt. Damit sind beliebige Anpassungen zwischen dem Encoder (mit einer bestimmten Periodenzahl am Umfang) und dem Empfänger möglich. Der Sensor fungiert mit dieser Programmierbarkeit als Adapter zwischen Bauteilen, die nicht aufeinander abgestimmt konstruiert wurden.
2. Bislang bedeutet eine Festlegung auf eine Impulsanzahl pro Umdrehung in Verbindung mit einem Encoderradius ebenfalls die Festlegung einer Periodenlänge am Encoderumfang. Somit ergeben sich in der Praxis sehr große Unterschiede in der Periodenlänge, je nach Anwendung. Ein universell verwendbarer Sensor, der hinsichtlich der Kosten von hohen Stückzahlen profitieren soll, muss all diese Periodenlängen unterstützen. Eine Festlegung auf eine feste Periodenlänge hat aber messtechnische Vorteile beim Sensorelement. Diese können mit der erfindungsgemäßen Sensoranordnung erstmals genutzt werden, weil zu einem vom Anwender festgelegten Encoderradius und der benötigten Skalierung des Datenwortes jede bevorzugte Periodenlänge gewählt werden kann (durch entsprechende Programmierung des Sensors).
3. Die Nachrichten, welche über die digitale Schnittstelle übertragen werden, können zusätzliche Informationen enthalten. Es besteht ein hoher Bedarf, solche zusätzlichen Informationen zu übertragen, wie man am Beispiel von Raddrehzahlsensoren im Automobil erkennen kann. Dort gibt es eine Erweiterung der üblichen frequenzanalogen Schnittstelle um ein Protokoll, bei dem jeweils im Anschluss an die Geschwindigkeitsimpulse mehrere Bits übertragen werden. Ab einer anwendungsabhängigen Grenzgeschwindigkeit fehlt jedoch die notwendige Zeit zwischen den Geschwindigkeitsimpulsen, um das Protokollwort vollständig zu übertragen. Dann sind Fallunterscheidungen für unterschiedliche Grade von Unvollständigkeit notwendig; überdies kann das Protokoll nicht für Informationen verwendet werden, die immer bzw. besonders bei hohen Geschwindigkeiten erforderlich sind.

Insbesondere viele Beschränkungen hinsichtlich der übertragenen Daten entfallen mit der erfindungsgemäßen Sensoranordnung. Das Datenwort kann beispielsweise in einen oder mehrere der folgenden Bereiche aufgeteilt werden, bzw. jede Teilmenge davon:
a) Winkelgeschwindigkeit (bzw. Geschwindigkeit, Frequenz, Drehzahl)
b) Winkel (bzw. Phase, Position)
c) Interne Statusinformation (Zustand des Sensors, z.B. Fehlerflags)
d) Externe Statusinformation (von angeschlossenen Komponenten, z.B. eine an Raddrehzahlsensoren übliche Erweiterung zur Bremsbelagverschleißerkennung)
e) Informationen zur Rückverfolgbarkeit (z.B. Seriennummer)
f) Weiterverarbeitung der Messdaten, besonders a. und b., um Informationen höherer Ordnung zu liefern, die die Empfängereinheit weiter entlasten (siehe auch noch nachfolgenden Punkt 4)

Insbesondere die Freiheit der Zuordnung von Informationen zu Bereichen von Datenworten ermöglicht ebenfalls mit der erfindungsgemäßen Sensoranordnung, unterschiedliche Arten von Datenworten bzw. Botschaften zu mischen, die ihrerseits durch ein Typfeld in jedem Datenwort vom Empfänger unterschieden werden können. Beispielhaft seien als zwei von vielen Möglichkeiten genannt:
- Bestimmte Botschaften enthalten nur die Winkelgeschwindigkeit, andere den Winkel. Beide Typen können mit unterschiedlicher Frequenz gesendet werden.
- Nur die erste Botschaft nach dem Einschalten des Systems enthält Informationen zur Rückverfolgbarkeit, bei allen weiteren entfällt dies, um Übertragungsbandbreite zu sparen.

4. Die freie Gestaltung der Botschaften nach Punkt 3 ermöglicht es zweckmäßigerweise, im Geschwindigkeitssensor Berechnungen auszuführen und die Ergebnisse zu übertragen. Zunächst erscheint die reine Verlagerung einer Berechnung von einer Einheit in eine andere wenig attraktiv, es gibt aber zwei Gründe, die eine Berechnung im Sensor sehr vorteilhaft machen können:
a) Wenn der Sensor z.B. in Form eines ASIC implementiert wird, ein angeschlossener Regler aber eine generische Recheneinheit ist, kann der Sensor über applikationsspezifische, festverdrahtete Berechnungseinheiten verfügen, die die betreffende Funktion zeitlich wie energetisch viel effizienter ausführen als die Software im Regler.
b) Wenn die Frequenz, mit der Botschaften gesendet werden sollen (oder, aufgrund von anwendungsabhängigen Grenzen der Bandbreite, können), kleiner ist als die Hälfte der höchsten relevanten Frequenz im primären Signal des Sensorelements, geht Information verloren (Abtasttheorem), sofern nur Momentanwerte eines Signals übertragen werden. Der Sensor kann dann eine Parameterextraktion aus dem primären Signal vornehmen und Parameter anstelle von bzw. ergänzend zu Momentanwerten übertragen. Eine solche Parameterextraktion spart in der Regel Bandbreite, weil sich Parameter von Signalen langsamer ändern als Momentanwerte.

Als Ausführungsbeispiel ist unten näher dargestellt die Bestimmung von Parametern am Verbrennungsmotor mit Hilfe von kurzzeitigen Schwankungen der Drehzahl der Kurbelwelle. Beispielhaft für die erfindungsgemäße Sensoranordnung ist dabei, dass die zur Parameterextraktion verwendeten Drehzahlschwankungen so schnell ablaufen, dass es nicht praktikabel wäre, Botschaften in einer Frequenz zu übertragen, die die Analyse der Drehzahlschwankungen empfängerseitig zulässt. Stattdessen wird die Tatsache ausgenutzt, dass die Drehzahlschwankungen sich nahezu periodisch wiederholen und ihre Amplitude sich nur langsam ändert. Aus dem Prozess, dessen eine Prozessgröße (Drehzahl) vom Sensor gemessen wird, werden mit der erfindungsgemäßen Lösung vorzugsweise weitere Prozessgrößen (Parameter) bestimmt, die nur mittelbar aus dem zeitlichen Verlauf der gemessenen Größe folgen.

Die Messung einer Frequenz ist maßgeblich von einer Zeitbasis abhängig. Dazu werden bevorzugt Quarzoszillatoren verwendet. Sie weisen die höchste Genauigkeit auf, sind jedoch nicht monolithisch integrierbar, empfindlich hinsichtlich maximaler Betriebstemperatur und Vibration - und teuer. Wenn möglich, werden daher RC-Oszillatoren bevorzugt. Für einen Taktgeber einer Digitalschaltung ist ihre Frequenztoleranz u.U. akzeptabel, für eine Frequenzmessung hingegen eher nicht. Da die erfindungsgemäße Sensoranordnung aus zwei Digitalschaltungen Geschwindigkeitssensor und elektronische Kontrolleinheit bzw. Regler besteht, stellt sich die Frage, wo welcher Oszillatortyp einzusetzen ist. Verwendet man je einen Oszillator beider Typen, so sollte diejenige Komponente, die die Frequenzmessung vornimmt, den Quarzoszillator haben - also der Sensor. Diese Zuordnung ist jedoch in vielen Anwendungen ausgesprochen unvorteilhaft, denn meist ist der Sensor härteren Umgebungsbedingungen ausgesetzt und Bauraum dort besonders knapp. Es ist daher vorzuziehen, die Zeitbasis, also den präziseren Oszillator, im Regler bzw. der elektronischen Kontrolleinheit anzusiedeln und nicht im Sensor. Für diesen Anwendungsfall gibt es zwei alternative Ausführungsbeispiele:
1. Der Sensor misst eine Frequenz relativ zu seiner lokalen, mit hoher Toleranz versehenen Oszillatorfrequenz. Der Takt, mit dem Datenworte über die digitale Schnittstelle übertragen werden, ist ebenfalls an die Oszillatorfrequenz gekoppelt. Dadurch kann der Empfänger nach Messung dieses Taktes die aktuelle Frequenz des Sensoroszillators bestimmen und das Ergebnis entsprechend skalieren. Damit ist zwar wieder eine Frequenzmessung verbunden, aber mit deutlich niedrigerer typischer Maximalfrequenz im Vergleich zur Impulsfrequenz nach Stand der Technik. Überdies ist aufgrund der Bauart des Sensoroszillators bekannt, in welchen Intervallen diese Messung wiederholt werden muss, um die Toleranzanforderungen zu erreichen. Drift und Temperaturänderung werden im Allgemeinen so langsam ablaufen, dass Messungen im Sekundenabstand ausreichen, die keine nennenswerte Belastung des Empfängers darstellen.
2. Der Sensor wird vom Regler getriggert, Datenworte abzusenden. Diese Methode setzt eine elementare bidirektionale Kommunikation voraus. Der Sensor wird damit vorteilhaft in den Zyklus des Reglers eingebunden. Die Triggerung bewirkt, dass gerade zu dem Zeitpunkt, zu dem ein Messergebnis für den Regelvorgang benötigt wird, die neueste Messung übertragen wird. Durch diese Abstimmung ist die Totzeit der Regelung besonders kurz. Die Skalierung der Frequenzmessung wird nun vom Sensor vorgenommen, indem dieser die Abstände zwischen Triggerimpulsen misst und damit die aktuelle Toleranz seines lokalen Oszillators bestimmt. Hinsichtlich der Häufigkeit dieser Messungen und des sich daraus ergebenden Aufwandes gilt das Gleiche wie unter Punkt 1.

Die Erfindung bezieht sich außerdem auch auf die Verwendung des Geschwindigkeitssensors in Kraftfahrzeugen, insbesondere als Kurbelwellendrehzahlsensor oder Raddrehzahlsensor oder als Drehzahlsensor in Antriebsstrangkomponenten, dabei beispielsweise als Getriebedrehzahlsensor, oder Turboladerdrehzahlsensor oder alternativ vorzugsweise in linearen, inkrementellen Sensoren.

Weitere bevorzugte Ausführungsformen ergeben sich aus den Unteransprüchen und der nachfolgenden Beschreibung eines Ausführungsbeispiels an Hand von Figuren.

### Bezugszeichen

- 1: ECU-Taktgebereinheit bzw. Oszillator des Reglers
- 2: Teiler
- 3: Mikrokontroller der ECU
- 4: Seriell-Parallel-Wandler
- 5: Elektronische Kontrolleinheit ECU bzw . Regler
- 6: Sendevorrichtung
- 7: Signalverarbeitungschaltung bzw. Signalverarbeitung
- 8: Sensorelement: Das physikalische Wandlerelement. Wandelt diejenige Größe, die vom Encoder moduliert wird, in eine elektrische Größe
- 9: Sensor-Taktgebereinheit, beispielhaft als numerisch gesteuerter Oszillator "NCO" ausgebildet, dargestellt mit zwei Ausgängen "sin" und "cos", die um 90° gegeneinander phasenverschoben sind.
- 10: Geschwindigkeitssensor bzw. Sensor
- 12: Analog-Digital-Wandler, beispielgemäß als Sigma-Delta-Modulator ausgebildet
- 14: Reglereinheit bzw. Regler: bestimmt durch seine Übertragungsfunktion die "Übersetzung" von Phasendifferenz in die Änderung der NCO-Frequenz
- 15: Phasendetektoreinheit bzw. Phasendetektor
- 16: Frequenzregister
- 17: Phasenregister
- 18: Logikeinheit bzw. Logik-Block der Ausgangsschaltung für die Impulserzeugung als Ausgangssignal des Geschwindigkeitssensor

- T1: Signal vom Regler zum Sensor (Trigger)
- T2: Signal vom Sensor zum Regler (Datenworte)
- S: Signalamplitude in beliebigen Einheiten
- t: Zeit

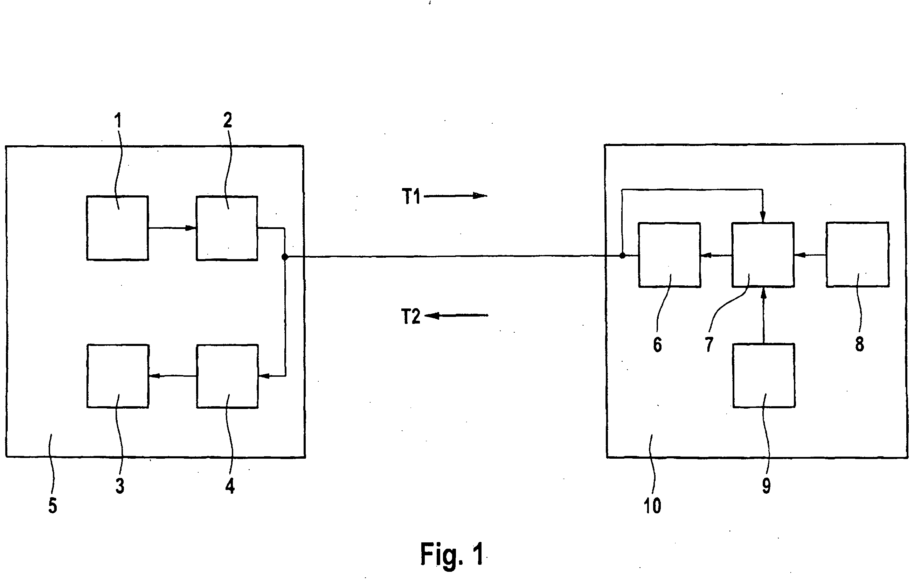

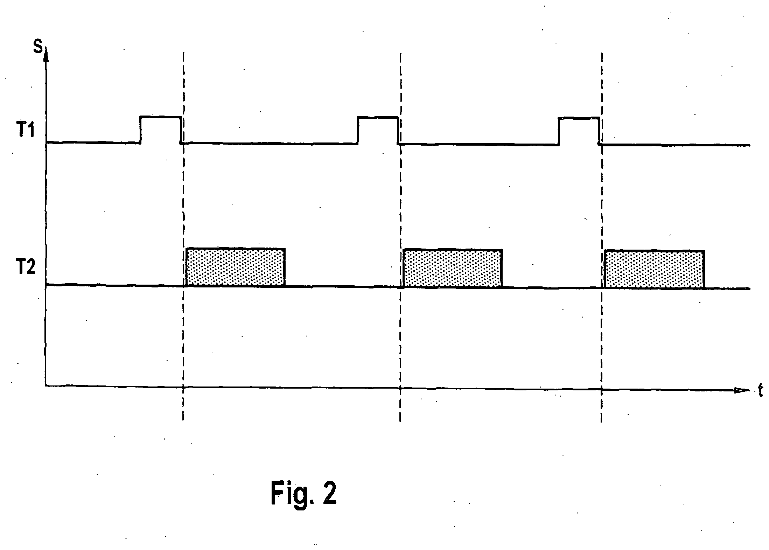

Das Ausführungsbeispiel der Sensoranordnung wird durch die Figuren 1 und 2 schematisch illustriert. Fig. 1 zeigt die Sensoranordnung selbst, Fig. 2 den beispielhaften zeitlichen Verlauf von Signalen, die zwischen den beiden beteiligten Einheiten, der elektronischen Kontrolleinheit 5 bzw. Regler5 (bzw. Steuergerät bzw. ECU, 5) und dem Geschwindigkeitssensor 10 übertragen werden.

Ein Ausführungsbeispiel des Geschwindigkeitssensors wird darüber hinaus durch die Figuren 3 bis 6 schematisch illustriert. Fig. 3 zeigt die Schaltung zur Frequenz- und Phasenmessung mittels der Costas-Schleifen-Einrichtung bzw. Costas-Schleife und Sensorelement, Fig. 4 die Lösung mit einer Korrekturvorrichtung zur Verbesserung der Phasenmessung bzw. zur Erzeugung eines korrigierten Phasensignals. In Fig. 5 ist der Aufbau einer beispielhaften Sensor-Taktgebereinheit als NCO dargestellt. Fig. 6 zeigt die Ausgangsschaltung zur Erzeugung der üblichen Ausgangsimpulse.

In Fig. 1 beginnt der Signalfluss mit dem ECU-Taktgebereinheit 1, der in elektronischer Kontrolleinheit 5 bzw. Regler 5 eingebaut ist. Es handelt sich beispielgemäß um einen Quarzoszillator. Die Frequenz dieses Oszillators wird nicht nur intern in ECU 5 als Taktgeber verwendet, sondern auf einen Teiler 2 gegeben, um die Kommunikation mit dem Geschwindigkeitssensor 10 zu takten. Teiler 2 ist erforderlich, um die üblicherweise im MHz-Bereich liegende Oszillatorfrequenz herunterzuteilen, da die Frequenz der Datenübertragung typischerweise im niedrigen KHz-Bereich oder sogar darunter liegt. Am Ausgang des Teilers 2 liegt das Triggersignal T1, welches auf die Übertragungsleitung gegeben wird, an die der Sensor 10 angeschlossen ist. Der Sensor 10 verfügt über eine Signalverarbeitungsschaltung 7, bei der zusätzlich die Signale des Sensorelements 8 und des Oszillators des Sensors 9 anliegen. Die Signalverarbeitungsschältung 7 ist mit dem Signal der Sensor-Taktgebereinheit 9 getaktet, wodurch das Messergebnis der Frequenz des Sensorelements 8 von Toleranzen der Oszillatorfrequenz abhängt. Das Signal T1 dient in diesem Zusammenhang als Frequenznormal. Die Frequenz von T1 ist zwar zu niedrig, um damit die Signalverarbeitung 7 zu takten, durch Messung auch der Frequenz von T1 zusätzlich zur Messung der Frequenz des Sensorelements 8 können die Toleranzen des Oszillators 9 aber ausgeglichen werden. Für die Durchführung der Korrektur sind verschiedene Möglichkeiten bekannt. So kann z.B. ein Zähler eingesetzt werden, um die Periodendauer von T1 mit dem Signal des Oszillators 9 bzw. Sensor-Taktgebereinheit 9 zu messen. Der Zählerstand, der die Periodendauer repräsentiert, wird mit einem konstanten Nennwert ins Verhältnis gesetzt, der beim Entwurf des Systems festgelegt wird. Aus dem Verhältnis ergibt sich dann ein Korrekturfaktor für die ebenfalls mit dem Oszillator 9 gemessene Frequenz des Sensorelements 8. Es wird also beispielhaft Signal T1 benutzt, um den Sensor zu triggern und zusätzlich die Korrektur mit T1 als Frequenznormal durchzuführen.

Nach Durchführung der Korrektur liegt das korrigierte Signal, dessen Toleranz nun durch die Frequenztoleranz des Oszillators 1 bzw. ECU-Taktgebereinheit 1 bestimmt ist, am Ausgang der Signalverarbeitungsschaltung 7 vor. Über eine Sendevorrichtung 6, im einfachsten Fall einen Schalttransistor, wird das von der Signalverarbeitung 7 berechnete Datenwort als Signal T2 auf den Weg zum Regler 5 bzw. ECU 5 geschickt. Dort wird eine Seriell-Parallel-Wandlung 4 durchgeführt, damit das Datenwort im Speicher des Mikrokontrollers 3 abgelegt werden kann. Die Wandlung erfolgt meistens im Mikrokontroller 3, der je nach Typ über eine interne Logik für solche Funktionen verfügen kann.

Fig. 2 zeigt die Signale T1 und T2 im zeitlichen Verlauf. Das Triggersignal T1 wirkt in diesem Beispiel mit der fallenden Flanke. Unmittelbar danach wird die Übertragung des Datenworts, dem Signal T2 gestartet. Die Datenworte werden durch die grauen Felder symbolisiert. Das System ist leicht zu erweitern, indem weitere Sender die Lücke zwischen dem Ende des Datenworts und dem nächsten Triggersignal nutzen. Alternativ können Sensoren so programmiert werden, dass sie nur bei jedem n-ten Triggerimpuls senden, so dass die nicht genutzten Triggersignale andere Quellen zum Senden triggern. Beide Verfahrensweisen werden erwähnt, um zu verdeutlichen, dass die beispielgemäße Sensoranordnung mit sämtliche Methoden, die bei elektronischen Schnittstellen zur Anwendung kommen, kompatibel ist. Das gilt auch für die Natur der Signale T1 und T2, die im Prinzip beliebig ist. Bekannt sind hier z.B. Spannungs- und Stromsignale, einfache und differentielle Signale sowie die Übertragung durch elektrische und magnetische Felder oder elektromagnetische Wellen.

Das Signal T1 ist nicht notwendigerweise auf die Triggerfunktion beschränkt. Die Dichte der Impulse kann zusätzlich für die Übertragung von Information genutzt werden, wenn dabei genau das Intervall ausgespart wird, das für die Triggerfunktion benötigt wird. Wenn z.B. die Frequenz von T1 den Wert 1 kHz hat und die Sensor-Taktgebereinheit 9 eine Frequenztoleranz von 20% aufweist, so erwartet der Sensor nach jedem Triggerimpuls ab einer Verzögerung von 0,8 ms bis zu maximal 1,2 ms auf den nächsten Triggerimpuls. Außerhalb dieses Zeitfensters können Impulse durch das Triggersystem ausgeblendet werden, um von einer anderen Einheit im Sensor dekodiert zu werden. Auch das Ausbleiben von Triggerimpulsen ist auf diese Weise zur Übertragung von Information nutzbar. Weiterhin kann eine leistungsfähige bidirektionale Übertragung durch die Darstellung der Teilfunktionen "Triggern der Datenübertragung des Sensors" und "Liefern eines Frequenznormals" mit getrennten Impulsen implementiert werden. Die einzelnen Impulse von T1 werden dann ebenfalls zu Datenworten, deren Beginn das Frequenznormal liefert und deren Ende triggert.

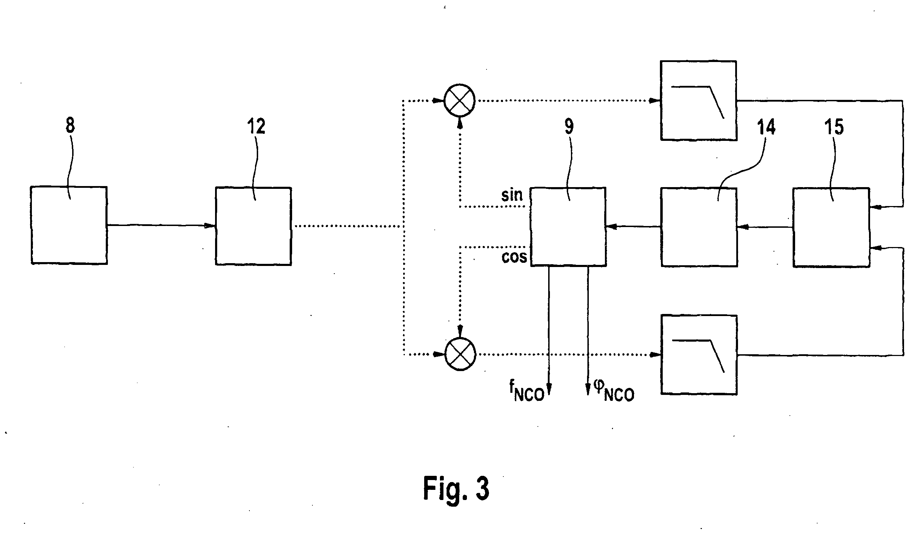

In Fig. 3 beginnt der Signalfluss mit dem Sensorelement 8. Das Ausgangssignal, üblicherweise eine Spannung, wird an den Sigma-Delta-Modulator 12 weitergegeben. Der Modulator erzeugt daraus eine Bitfolge ("Bitstrom"), deren Dichte an Einsen proportional zum Sensorsignal ist. Die Bitströme sind zur Verdeutlichung durch die punktierten Linien dargestellt. Das Ausgangssignal des Modulators wird an die Eingänge von zwei Multiplizierern (dargestellt durch das übliche Schaltsymbol) gelegt, deren jeweils anderer Eingang an einem Ausgang des NCO 9 als Sensor-Taktgebereinheit liegt. Die NCO-Ausgänge sind mit "sin" und "cos" bezeichnet, um die 90°-Phasenverschiebung zwischen den Ausgängen zu illustrieren. Die Multiplizierer sind, da es sich um Bitströme handelt, lediglich einzelne XOR-Gatter. Sie erzeugen zwei weitere Bitströme, die als Frequenzen Summe und Differenz der Eingangsfrequenzen enthalten, d.h. der des Sensorelements und der des NCO 9. Die beiden nachgeschalteten Tiefpässe, dargestellt mit den üblichen Symbolen, filtern aus dem Frequenzgemisch nur die Differenz heraus. Dabei entstehen aus den (hochfrequenten) Bitströmen niederfrequente Signale, die aber eine Wortbreite haben, die deutlich über 1 Bit liegt, z.B. 10 Bit. Aufgrund der Phasenverschiebung der NCO-Ausgänge sind auch die Ausgangssignale der Tiefpässe um 90° gegeneinander verschoben. Daher lässt sich aus diesen Signalen ein Winkel bestimmen. Das ist die Aufgabe der Phasendetektoreinheit 15. Deren Ausgangssignal entspricht der Phasendifferenz zwischen Eingang und NCO. Die Phasendetektoreinheit nutzt hierfür beispielgemäß zur Berechnung den Vierquadranten-Arcustangens aus ihren Eingängen. Die Verwendung des Vierquadranten-Arcustangens hat den Vorteil, den Eindeutigkeitsbereich vom üblichen Intervall [-π/2, π/2] auf [-π, π] zu verdoppeln. Die Phasendifferenz wird in Reglereinheit 14 unter Verwendung einer geeigneten Übertragungsfunktion und ggf. einer geeigneten Regelstrategie in ein Signal umgesetzt, das die Frequenz des NCOs 9 steuert. Damit ist der Regelkreis geschlossen.

Die Ausgänge der Schaltung sind die Frequenz f_{NCO} und die Phase ϕ_{NCO} des NCO. Diese Werte liegen in den NCO-Registern direkt vor.

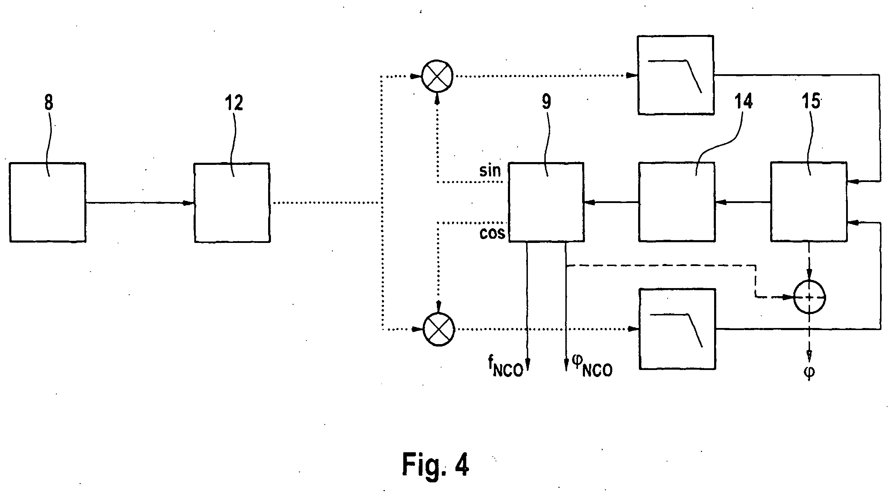

Fig. 4 stellt die beispielgemäße Ergänzung der Costas-Schleifen-Einheit bzw. Costas-Schleife dar. Die Ergänzung, gestrichelt dargestellt, ist der Unterschied zu Fig. 3. Vom Ausgang ϕ_{NCO} des NCO 9 wird die Phase übernommen und zu einem Summierer bzw. Addierer geführt, an dessen anderem Eingang die Phasendifferenz der Phasendetektoreinheit 15 liegt. Die Summe bzw. die Differenz, je nach Vorzeichenregelung der jeweiligen Implementierung, ist dann die korrigierte Phase bzw. das korrigierte Phasensignal. Kurzzeitige Regelfehler wirken sich bei dieser Form weniger auf die Phasenmessung aus, weil die Verzögerung durch den Regelvorgang entfällt. Dadurch verringern sich die Anforderungen an die Regelgüte des gesamten Systems.

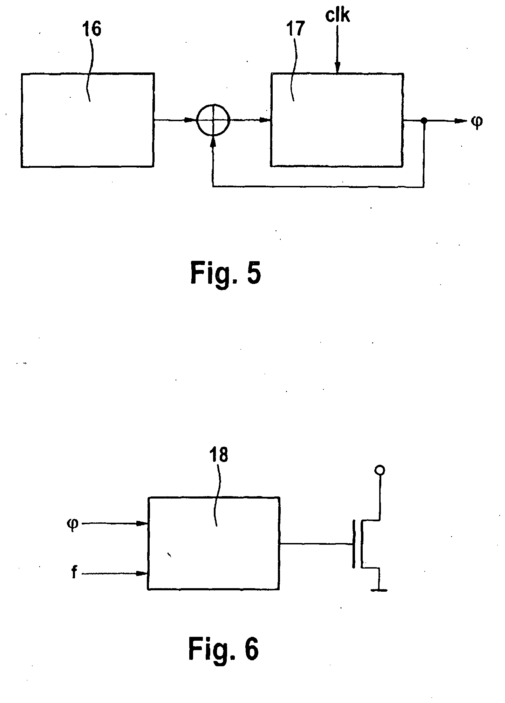

Fig. 5 zeigt die Bestandteile des NCOs 9 als Sensor-Taktgebereinheit. Das Phasenregister 17 enthält die aktuelle Phase des NCO. In jedem Schritt, ausgelöst durch das Taktsignal clk dessen Frequenz konstant ist, wird der Inhalt des Phasenregisters aktualisiert, indem der Wert des Frequenzregisters 16 addiert wird. Damit wird die Rate, mit der sich die Phase ändert, proportional zum Inhalt des Frequenzregisters. Reglereinheit 14 wirkt auf dieses Frequenzregister, indem er in Abhängigkeit von der Phasendifferenz einen neuen Frequenzwert einstellt. Die Ausgänge "sin" und "cos" werden aus der Phase ϕ abgeleitet, indem bei bestimmten Werten der Phase, die geraden und ungeraden Vielfachen von 90° entsprechen, der Wert des Ausgangs einfach umgeschaltet wird. Dazu genügt jeweils ein einzelnes Flip-Flop und ein Gatter, vorausgesetzt, die Phase ist so skaliert, dass es eine binäre Stelle im Phasenregister gibt, die 90° entspricht.

Im Unterschied zu analogen Implementierungen von Phasenregelschleifen, die auf VCOs basieren, kann ein NCO immer nur mit diskreten, per Design festgelegten Frequenz- und Phasenwerten arbeiten. Dadurch ergibt sich jedoch keinerlei Einschränkung für die praktische Anwendung, da die Auflösung praktisch beliebig gesteigert werden kann. Für jedes zusätzliche Bit müssen lediglich die Register und der Addierer entsprechend verbreitert werden, was nur wenige zusätzliche Gatter erfordert.

Fig. 6 illustriert die Ausgangsschaltung. Es handelt sich im Wesentlichen um Logikeinheit 18 bzw. um einen Logik-Block mit Frequenz und Phase als Eingängen und einem Ausgang, der einen Schalttransistor als Treiberstufe zur Erzeugung der Ausgangsimpulse bedient. Gezeigt ist beispielhaft ein Open-Drain-Ausgang, neben Open-Collector ist aber ebenso eine Push-Pull-Stufe in MOS- oder Bipolar-Technik denkbar, ebenso wie jede andere Schaltung, die mit elektronischen Mitteln zwei Ausgangspegel erzeugen kann.

Der Inhalt der Logikeinheit bzw. des Logik-Blocks hängt ab von den Funktionen, die mit dem Sensor möglich sein sollen. Im einfachsten Fall kann der Block aus einer einfachen Verbindungsleitung zwischen einem Flip-Flop des Phasenregisters und dem Ausgang bestehen. Dann schaltet der Transistor immer, wenn sich der Zustand dieses Flip-Flop ändert, d.h. die Phase einen bestimmten Schwellwert überschreitet. Funktionen wie die oben erwähnte Programmierbarkeit, Kompensation der Verzögerungszeit und Kompensation von Encoderfehlern erfordern jedoch eine Logik, bei denen der Schwellwert aufgrund weiterer Informationen verschoben werden kann.

## Patentansprüche

1. Sensoranordnung umfassend einen Geschwindigkeitssensor (10), wobei der Geschwindigkeitssensor als Kurbelwellendrehzahlsensor oder Raddrehzahlsensor oder als Drehzahlsensor in Antriebsstrangkomponenten oder als Turboladerdrehzahlsensor ausgebildet ist,
wobei der Geschwindigkeitssensor zumindest ein Sensorelement (8) aufweist, sowie eine elektronische Kontrolleinheit (5), wobei der Geschwindigkeitssensor (10) und die elektronische Kontrolleinheit (5) mittels wenigstens einer Leitung miteinander verbunden sind, **dadurch gekennzeichnet, dass**
der Geschwindigkeitsensor (10) eine Signalverarbeitungsschaltung (7) aufweist, welche so ausgebildet ist, dass diese aus dem Sensorelementausgangssignal zumindest ein digitales Frequenzsignal gewinnt, welches in einem Datenwort codiert ist und in zumindest einer ersten Speichereinheit gespeichert wird und an die elektronische Kontrolleinheit (5) übertragen wird, wobei der Geschwindigkeitssensor (10) eine Sensor-Taktgebereinheit (9) aufweist, mit welcher das digitale Frequenzsignal skaliert ist und/oder von dieser abhängt, wobei die elektronische Kontrolleinheit (5) so ausgelegt ist, dass sie zu definierten Zeiten oder in einem definierten Takt Datenanforderungssignale an den Geschwindigkeitssensor (10) sendet und dieser so ausgebildet ist, dass er als Antwort darauf jeweils ein Datenwort an die elektronische Kontrolleinheit (5) überträgt.

2. Sensoranordnung nach Anspruch 1, **dadurch gekennzeichnet, dass** zumindest die Sensor-Taktgebereinheit (9) mit der Signalverarbeitungsschaltung (7) gemeinsam auf einem Chip integriert ausgebildet ist, insbesondere als RC-Oszillator.

3. Sensoranordnung nach mindestens einem der Ansprüche 1 bis 2, **dadurch gekennzeichnet, dass** die elektronische Kontrolleinheit (5) eine ECU-Taktgebereinheit (1) aufweist, welche insbesondere einen Quarzoszillator umfasst.

4. Sensoranordnung nach einem der vorhergehenden Ansprüche, **dadurch gekennzeichnet, dass** die elektronische Kontrolleinheit (5) so ausgebildet ist, dass sie in definierter Weise in Abhängigkeit der Taktfrequenz ihrer ECU-Taktgebereinheit (1) die Datenanforderungssignale an den Geschwindigkeitssensor sendet, insbesondere mit konstanter Anforderungsfrequenz, und dass der Geschwindigkeitssensor (10) so ausgebildet ist, dass er die Anforderungsfrequenz erfasst und in Abhängigkeit eines Verhältnisses von Anforderungsfrequenz zur Taktfrequenz der eigenen Sensor-Taktgebereinheit (9) die Frequenzinformation oder das Frequenzsignal eines Datenwortes, insbesondere jeden Datenwortes, anpasst oder korrigiert.

5. Sensoranordnung nach mindestens einem der Ansprüche 1 bis 4, **dadurch gekennzeichnet, dass** der Geschwindigkeitssensor (10) so ausgebildet ist, dass ein Datenwort wenigstens eine oder mehrere der folgenden Informationen umfasst
- eine Frequenzinformation oder das digitale Frequenzsignal,
- eine Winkelinformation,
- eine interne Statusinformation des Geschwindigkeitssensors,
- eine externe Statusinformationen, von wenigstens einer externen, an den Geschwindigkeitssensor angeschlossenen Komponente,
- eine Identifikationsinformation des Geschwindigkeitssensors selbst und/oder
- detaillierte Messinformationen.

6. Sensoranordnung nach mindestens einem der Ansprüche 1 bis 5, **dadurch gekennzeichnet, dass** der Geschwindigkeitssensor, zumindest ein Sensorelement (8) und einen Analog-Digital-Wandler (12) umfasst, welcher die Sensorelementausgangssignale digitalisiert, wobei der Geschwindigkeitssensor eine Costas-Schleifen-Einheit (9, 14, 15) aufweist, welche am Ausgang des Analog-Digital-Wandlers (12) angeschlossen ist, wobei der Analog-Digital-Wandler (12) insbesondere als Sigma-Delta-Modulator ausgebildet ist.

7. Sensoranordnung nach Anspruch 6, **dadurch gekennzeichnet, dass** die Costas-Schleifen-Einheit (9, 14, 15) so ausgebildet ist, dass sie zumindest ein Frequenzausgangssignal (f_{NCO}) oder ein Phasenausgangssignal (ϕ_{NCO}) oder ein Frequenzausgangssignal (f_{NCO}) und ein Phasenausgangssignal (ϕ_{NCO}) bereitstellt, jeweils in Abhängigkeit des Sensorelementausgangssignals.

8. Sensoranordnung nach Anspruch 6 oder 7, **dadurch gekennzeichnet, dass** der Ausgang des Analog-Digital-Wandlers (12), der einen Bitstrom bereitstellt, jeweils mit einem ersten Multiplizierer und einem zweiten Multiplizierer verbunden ist, wobei dem ersten und zweiten Multiplizierer jeweils zusätzlich ein Taktsignal der Sensor-Taktgebereinheit (9) zugeführt werden, wobei die dem ersten und dem zweiten Multiplizierer zugeführten Taktsignale (sin, cos) zueinander um 90° phasenverschoben sind, wobei die Ausgangssignal des ersten und zweiten Multiplizierers jeweils einem Tiefpassfilter zugeführt werden, deren Ausgänge jeweils einer gemeinsamen Phasendetektoreinheit (15) zugeführt werden, welche ausgangsseitig mit einer Reglereinheit (14) verbunden ist, die ausgangsseitig mit der Sensor-Taktgebereinheit (13) verbunden ist.

9. Sensoranordnung nach mindestens einem der Ansprüche 6 bis 8, **dadurch gekennzeichnet, dass** die Sensor-Taktgebereinheit (9) als numerisch gesteuerter Oszillator ausgebildet ist, wobei die Taktgebereinheit das Frequenzausgangssignal (f_{NCO}) und/oder das Phasenausgangssignal (ϕ_{NCO}) als Ausgangssignale der Costas-Schleifen-Einheit bereitstellt.

10. Sensoranordnung nach mindestens einem der Ansprüche 6 bis 9, **dadurch gekennzeichnet, dass** das Ausgangssignal der Phasendetektoreinheit (15) und das Phasenausgangssignal (ϕ_{NCO}) der Sensor-Taktgebereinheit (9) addiert werden, insbesondere in einem Summierer, wodurch ein korrigiertes Phasensignal (ϕ) erzeugt wird, welches ein Ausgangssignal der Costas-Schleifen-Einheit bildet, insbesondere alternativ oder zusätzlich zum Phasenausgangssignal (ϕ_{NCO}) der Sensor-Taktgebereinheit (9).

11. Sensoranordnung nach mindestens einem der Ansprüche 6 bis 10, **dadurch gekennzeichnet, dass** der Geschwindigkeitssensor eine Ausgangsschaltung (18) umfasst, welcher von der Costas-Schleifen-Einheit ein Frequenzsignal und mindestens ein Phasensignal zugeführt werden, insbesondere das Frequenzausgangssignal (f_{NCO}) der Sensor-Taktgebereinheit (9) und das Phasenausgangssignal (ϕ_{NCO}) der Sensor-Taktgebereinheit und/oder das korrigierte Phasensignal (ϕ), wobei die Ausgangsschaltung (18) wenigstens eine Treiberstufe zum Senden des Ausgangssignals des Geschwindigkeitssensors über wenigstens eine Leitung aufweist und eine Logikeinheit (18) aufweist, mit welcher das Ausgangssignal der Ausgangsschaltung mit definierten Signaleigenschaften als definierte Schnittstelle bereitgestellt wird, wobei insbesondere die Logikeinheit (18) programmierbar und/oder umschaltbar ausgebildet ist, so dass das Ausgangssignal der Ausgangsschaltung und damit des Geschwindigkeitssensors an unterschiedliche Schnittstellen-Anforderungen anpassbar ausgebildet ist.

12. Sensoranordnung nach Anspruch 10 oder 11, **dadurch gekennzeichnet, dass** die Logikeinheit (18) eine Kompensationseinrichtung aufweist, welche Kompensations-Informationen, insbesondere in wenigstens einer Tabelle, umfasst, mit denen Encoderfehler, dessen moduliertes magnetisches Feld oder optisches Muster das Sensorelement erfasst, kompensiert werden können und/oder mit denen Temperatureinflüsse kompensierbar sind und/oder mit denen eine Phasenverschiebung einstellbar oder programmierbar ist und/oder mit denen eine Verzögerungszeit im Signalpfad innerhalb des Sensors kompensierbar ist, wozu die Kompensationseinrichtung von außerhalb des Geschwindigkeitssensors angesteuert wird und/oder vom Geschwindigkeitssensor intern selbstständig angesteuert wird.

## Claims

1. Sensor arrangement comprising a speed sensor (10), wherein the speed sensor is in the form of a crankshaft speed sensor or a wheel speed sensor or a speed sensor in drive train components or a turbocharger speed sensor, wherein the speed sensor comprises at least one sensor element (8), and an electronic control unit (5), wherein the speed sensor (10) and the electronic control unit (5) are connected to one another by at least one line, **characterized in that** the speed sensor (10) comprises a signal processing circuit (7), which is designed so that it obtains from the sensor-element output signal at least one digital frequency signal, which is encoded in a data word and stored in at least a first memory unit and transmitted to the electronic control unit (5), wherein the speed sensor (10) comprises a sensor clock generator unit (9), where the digital frequency signal is scaled by and/or is dependent on said sensor clock generator unit, wherein the electronic control unit (5) is designed so that it transmits data request signals to the speed sensor (10) at defined times or at a defined clock rate, and said speed sensor is designed so that it transmits as a response to each of said data request signals a data word to the electronic control unit (5).

2. Sensor arrangement according to Claim 1, **characterized in that** at least the sensor clock generator unit (9) is integrated together with the signal processing circuit (7) on a chip, in particular as an RC oscillator.

3. Sensor arrangement according to at least one of Claims 1 and 2, **characterized in that** the electronic control unit (5) comprises an ECU clock generator unit (1), which in particular comprises a crystal oscillator.

4. Sensor arrangement according to one of the preceding claims, **characterized in that** the electronic control unit (5) is designed so that it sends the data request signals to the speed sensor in a defined manner on the basis of the clock frequency of its ECU clock generator unit (1), in particular at a constant request frequency, and that the speed sensor (10) is designed so that it detects the request frequency, and adjusts or corrects the frequency information or the frequency signal of a data word, in particular of each data word, according to a ratio of the request frequency to the clock frequency of its own sensor clock generator unit (9).

5. Sensor arrangement according to at least one of Claims 1 to 4, **characterized in that** the speed sensor (10) is designed so that a data word comprises at least one or a plurality of the following pieces of information:
- a piece of frequency information or the digital frequency signal,
- a piece of angle information,
- a piece of internal status information from the speed sensor,
- a piece of external status information from at least one external component connected to the speed sensor,
- a piece of identification information from the speed sensor itself and/or
- detailed measurement information.

6. Sensor arrangement according to at least one of Claims 1 to 5, **characterized in that** the speed sensor comprises at least one sensor element (8) and an analog-to-digital converter (12), which digitizes the sensor-element output signals, wherein the speed sensor comprises a Costas loop unit (9, 14, 15), which is connected to the output of the analog-to-digital converter (12), wherein the analog-to-digital converter (12) in particular is in the form of a sigma-delta modulator.

7. Sensor arrangement according to Claim 6, **characterized in that** the Costas loop unit (9, 14, 15) is designed so that it provides at least a frequency output signal (f_{NCO}) or a phase output signal (ϕ_{NCO}) or a frequency output signal (f_{NCO}) and a phase output signal (ϕ_{NCO}), each on the basis of the sensor-element output signal.

8. Sensor arrangement according to Claim 6 or 7, **characterized in that** the output of the analog-to-digital converter (12), which provides a bit stream, is connected in each case to a first multiplier and to a second multiplier, wherein additionally the first multiplier and the second multiplier are each fed with a clock signal from the sensor clock generator unit (9), wherein the clock signals (sin, cos) fed to the first multiplier and the second multiplier are offset in phase by 90° with respect to one another, wherein the output signal from the first multiplier and the second multiplier is fed in each case to a low-pass filter, the outputs of which are each fed to a common phase detector unit (15), which is connected on the output side to a controller unit (14), the output of which is connected to the sensor clock generator unit (13).

9. Sensor arrangement according to at least one of Claims 6 to 8, **characterized in that** the sensor clock generator unit (9) is in the form of a numerically controlled oscillator, wherein said clock generator unit provides the frequency output signal (f_{NCO}) and/or the phase output signal (ϕ_{NCO}) as output signals from the Costas loop unit.

10. Sensor arrangement according to at least one of Claims 6 to 9, **characterized in that** the output signal from the phase detector unit (15) and the phase output signal (ϕ_{NCO}) from the sensor clock generator unit (9) are summated, in particular in a summator, thereby generating a corrected phase signal (ϕ) that forms an output signal from the Costas loop unit, in particular alternatively or additionally to the phase output signal (ϕ_{NCO}) from the sensor clock generator unit (9).

11. Sensor arrangement according to at least one of Claims 6 to 10, **characterized in that** the speed sensor comprises an output circuit (18) to which are fed from the Costas loop unit a frequency signal and at least one phase signal, in particular the frequency output signal (f_{NCO}) from the sensor clock generator unit (9) and the phase output signal (ϕ_{NCO}) from the sensor clock generator unit and/or the corrected phase signal (ϕ), wherein the output circuit (18) comprises at least one driver stage for transmitting the output signal from the speed sensor over at least one line, and comprises a logic unit (18), which is used to provide the output signal from the output circuit such that it has defined signal properties as a defined interface, wherein in particular the logic unit (18) is designed to be programmable and/or switchable, so that the output signal from the output circuit and hence from the speed sensor is designed to be adaptable to different interface requirements.

12. Sensor arrangement according to Claim 10 or 11, **characterized in that** the logic unit (18) comprises a compensation device, which contains, in particular in at least one table, compensation data, which can be used to compensate for encoder errors, the modulated magnetic field or optical pattern of which the sensor element detects, and/or can be used to compensate for temperature effects and/or can be used to adjust or program a phase offset and/or can be used to compensate for a delay in the signal path within the sensor, for which purpose the compensation device is controlled from outside the speed sensor and/or is controlled internally, autonomously by the speed sensor.

## Revendications

1. Système de détection comprenant un capteur de vitesse (10), dans lequel le capteur de vitesse est réalisé sous forme d'un capteur de vitesse de rotation à vilebrequin d'un capteur de rotation de roue ou sous forme d'un capteur de vitesse de rotation dans des composants d'une chaîne d'entraînement ou sous forme de capteur de vitesse de rotation de turbochargeur,
dans lequel le capteur de vitesse présente au moins un élément de détection (8) ainsi qu'une unité de commande électronique (5), le capteur de vitesse (10) et l'unité de commande électronique (5) étant reliés entre eux au moyen d'au moins une ligne, **caractérisé en ce que**
le capteur de vitesse (10) présente un circuit de traitement de signaux (7) qui est réalisé de manière à ce que celui-ci génère à partir du signal de sortie de l'élément de détection au moins un signal de fréquence numérique qui est codé en un mot contenant des données et est sauvegardé au moins dans une première unité de mémoire et est transféré à l'unité de commande électronique (5), le capteur de vitesse (10) présentant une unité à générateur d'horloge de capteur (9) grâce à laquelle le signal de fréquence est échelonné et/ou dépend de celle-ci, l'unité de commande électronique (5) étant conçue pour émettre, à des heures définies ou suivant une cadence définie, des signaux de demande de données vers le capteur de vitesse (10) et celui-ci étant réalisé de manière à transmettre comme réponse à ceci respectivement un mot contenant des données à l'unité de commande électronique (5).

2. Système de détection selon la revendication 1, **caractérisé en ce qu'**au moins l'unité à générateur d'horloge de capteur (9) est réalisée en intégration commune avec le circuit de traitement de signaux (7) sur une puce, en particulier sous forme d'un oscillateur RC.

3. Système de détection selon au moins l'une quelconque des revendications 1 à 2, **caractérisé en ce que** l'unité de commande électronique (5) présente une unité de génération d'horloge ECU (1) qui comprend en particulier un oscillateur à quartz.

4. Système de détection selon l'une des revendications précédentes, **caractérisé en ce que** l'unité de commande électronique (5) est conçue pour, de manière définie, en fonction de la fréquence d'horloge de son unité de génération d'horloge ECU (1), envoyer des signaux de demande de données au capteur de vitesse, en particulier avec une fréquence de demande constante, et que le capteur de vitesse (10) est réalisé de manière à détecter la fréquence de demande et, en fonction d'un rapport entre la fréquence de demande et la fréquence d'horloge de sa propre unité de génération d'horloge de capteur (9), adapte ou corrige l'information de fréquence ou le signal de fréquence d'un mot contenant des données, en particulier de chaque mot contenant des données.

5. Système de détection selon au moins l'une quelconque des revendications 1 à 4, **caractérisé en ce que** le capteur de vitesse (10) est réalisé de manière à ce qu'un mot contenant des données comprenne au moins une ou plusieurs des informations suivantes
- une information de fréquence ou le signal de fréquence numérique,
- une information d'angle,
- une information de statut interne du capteur de vitesse,
- une information de statut externe d'au moins un composant externe raccordé au capteur de vitesse,
- une information d'identification du capteur de vitesse lui-même et/ou
- des informations de mesure détaillées.

6. Système de détection selon au moins l'une quelconque des revendications 1 à 5, **caractérisé en ce que** le capteur de vitesse comprend au moins un élément de détection (8) et un convertisseur analogique-numérique (12) qui numérise les signaux de sortie de l'élément de détection, le capteur de vitesse présentant une unité à boucle de Costas (9, 14, 15) qui est raccordée à la sortie du convertisseur analogique-numérique (12), le convertisseur analogique-numérique (12) étant réalisé en particulier sous forme d'un modulateur Sigma-Delta.

7. Système de détection selon la revendication 6, **caractérisé en ce que** l'unité à boucle de Costas (9, 14, 15) est réalisée de manière à fournir au moins un signal de sortie de fréquence (f_{NCO}) ou un signal de sortie de phase (ϕ_{NCO}) ou un signal de sortie de fréquence (f_{NCO}) et un signal de sortie de phase (ϕ_{NCO}), respectivement en fonction du signal de sortie de l'élément de détection.

8. Système de détection selon la revendication 6 ou 7, **caractérisé en ce que** la sortie du convertisseur analogique-numérique (12) qui fournit un premier flux de bits est reliée respectivement à un premier multiplicateur et à un second multiplicateur, un signal d'horloge de l'unité de génération de signal d'horloge du capteur (9) étant de plus respectivement envoyé aux premier et second multiplicateurs, les signaux d'horloge envoyés aux premier et second multiplicateurs (sin, cos) étant mutuellement décalés au niveau de leur phase de 90°, les signaux de sortie des premier et second multiplicateurs étant respectivement envoyés à un filtre passe-bas dont les sorties sont respectivement envoyées à une unité commune de détection de phase (15) qui est reliée au niveau sortie à une unité de réglage (14) qui est reliée au niveau sortie à l'unité de génération d'horloge du capteur (13).

9. Système de détection selon au moins l'une quelconque des revendications 6 à 8, **caractérisé en ce que** l'unité de génération d'horloge du capteur (9) est réalisée sous forme d'un oscillateur à commande numérique, l'unité de génération d'horloge fournissant le signal de sortie de fréquence (f_{NCO}) et/ou le signal de sortie de phase (ϕ_{NCO}) sous forme de signaux de sortie à l'unité à boucle de Costas.

10. Système de détection selon au moins l'une quelconque des revendications 6 à 9, **caractérisé en ce que** le signal de sortie de l'unité de détection de phase (15) et le signal de sortie de phase (ϕ_{NCO}) de l'unité de génération d'horloge du capteur (9) sont additionnés, en particulier dans un totalisateur, ce qui génère un signal de phase corrigé (ϕ) qui constitue un signal de sortie de l'unité à boucle de Costas, en particulier en alternative ou en complément au signal de sortie de phase (ϕ_{NCO}) de l'unité de génération d'horloge du capteur (9).

11. Système de détection selon au moins l'une quelconque des revendications 6 à 10, **caractérisé en ce que** le capteur de vitesse comprend un circuit de sortie (18) auquel l'unité à boucle de Costas envoie un signal de fréquence et au moins un signal de phase, en particulier le signal de sortie de fréquence (f_{NCO}) de l'unité de génération d'horloge du capteur (9) et le signal de sortie de phase (ϕ_{NCO}) de l'unité de génération d'horloge du capteur et/ou le signal de phase corrigé (ϕ), le circuit de sortie (18) présentant au moins un niveau pilote pour envoyer le signal de sortie du capteur de vitesse via au moins une ligne et une unité logique (18) à l'aide de laquelle le signal de sortie du circuit de sortie est fourni avec des propriétés de signal définies sous forme d'interface définie, l'unité logique (18) étant programmable et/ou commutable, de sorte que le signal de sortie du circuit de sortie et par conséquent du capteur de vitesse est réalisé de manière à être adaptable à différentes exigences d'interface.

12. Système de détection selon la revendication 10 ou 11, **caractérisé en ce que** l'unité logique (18) présente un dispositif de compensation qui comprend des informations de compensation, en particulier dans au moins un tableau, à l'aide desquelles des erreurs de codage, dont l'élément de détection détecte le champ magnétique modulé ou le motif optique, peuvent être compensées et/ou à l'aide desquelles les influences exercées par la température peuvent être compensées et/ou à l'aide desquelles un décalage de phase peut être réglé ou programmé et/ou à l'aide desquelles un temps de retardement dans le chemin des signaux à l'intérieur du capteur peut être compensé, ce pourquoi le dispositif de compensation est commandé depuis l'extérieur du capteur de vitesse et/ou est commandé automatiquement en interne par le capteur de vitesse.
